# EUROPÄISCHE PATENTSCHRIFT

(11) **EP 3 587 225 B1**
(45) Veröffentlichungstag und Bekanntmachung des Hinweises auf die Patenterteilung: **28.07.2021**
(21) Anmeldenummer: 18180594.6
(22) Anmeldetag: 28.06.2018
(51) Int. Cl.: B62D 55/125

(54) **KETTENANTRIEB**
CHAIN DRIVE
ENTRAÎNEMENT PAR CHAÎNE

(43) Veröffentlichungstag der Anmeldung: 01.01.2020
(73) Patentinhaber: Beutler, Jörg, 83607 Holzkirchen (DE)
(72) Erfinder: Beutler, Jörg, 83607 Holzkirchen (DE); Katkow, Artur, 71723 Großbottwar (DE)
(74) Vertreter: Lermer, Christoph

(56) Entgegenhaltungen:
- CA-A1- 2 455 074
- US-A- 2 416 679
- US-A- 3 459 459
- US-B1- 7 036 894

## Beschreibung

### TECHNISCHES GEBIET

Die vorliegende Erfindung betrifft ein Antriebssystem, umfassend: ein Antriebselement; und eine Gegenverzahnung, wobei das Antriebselement aufweist: eine endlose Kette zum gegenseitigen Eingriff mit der Gegenverzahnung zur Übertragung einer Antriebskraft; und wenigstens ein Antriebsritzel zum gegenseitigen Eingriff mit der Kette und zum Antrieb der Kette.

### STAND DER TECHNIK

Transportfahrzeuge mit formschlüssigen Antrieben sind bekannt, beispielsweise als Zahnradbahnen oder im Bergbau. Formschlüssige Antriebe haben gegenüber reibschlüssigen Antrieben den Vorteil, dass der Wirkungsgrad verbessert werden kann, da ein Gleiten des Antriebsrads auf der Antriebsschiene bei einer formschlüssigen Verbindung praktisch ausgeschlossen ist. Zudem sind größere Momente und somit größere Beschleunigungen vom Antrieb auf die Schiene übertragbar. Auch bei Vergnügungsbahnen, wie Achterbahnen, sind diese Antriebe bereits im Einsatz.

In der Regel greift bei diesen Antrieben ein am Fahrzeug befestigtes und angetriebenes Zahnritzel in die Verzahnung einer an der Fahrstrecke (z.B. an einer Schiene) angeordneten Zahnstange oder Zahnkette ein. Es tritt jedoch häufig das Problem auf, dass eine geeignete Übersetzung vom Motor auf die Gegenverzahnung nicht umgesetzt werden kann und die Kraftübertragung durch die Zahl der zugleich eingreifenden Zähne des Antriebsritzels begrenzt ist. Durch eine Vergrößerung des Durchmessers des Antriebsritzels wäre dieses Problem lösbar. Allerdings erhöht sich dadurch der benötigte Bauraum deutlich und die Maßnahme führt zu einer Erhöhung des erforderlichen Momentes (Getriebeanforderung steigen).

Eine andere Möglichkeit bestünde in einer Verdoppelung des Antriebsstranges, also darin, anstatt einem Antriebsritzel zwei oder mehrere Ritzel einzusetzen, die die Kraftübertragung erhöhen. Das führt jedoch zwangsläufig zu höheren Kosten und auch zu einer komplexeren Steuerung bzw. Regelung der Motoren.

Einen bekannten formschlüssigen Antrieb zeigt das Patent EP2483121B1.

Die Druckschrift US 3,459,459 A offenbart ein Kettenfahrzeug, bei dem ein System zum Antrieb einer endlosen Kette mit einem Antriebsritzel, einer Antriebskette und einer Kettenführung vorgesehen ist, wobei die endlose Kette von der Antriebskette angetrieben wird.

Die Druckschrift US 7,036,894 B1 zeigt ein Tandem-Ketten-System, das einen sicheren Rückzug gewährleistet, wenn die primäre Kette durchtrennt wird.

### AUFGABE DER ERFINDUNG

Ausgehend davon besteht die Aufgabe der vorliegenden Erfindung darin, ein Antriebssystem vorzuschlagen, bei dem, bei geringem Platzbedarf, ein großes Antriebsmoment übertragen werden kann.

### TECHNISCHE LÖSUNG

Diese Aufgabe wird gelöst durch ein Antriebssystem gemäß dem Anspruch 1. Vorteilhafte Merkmale und bevorzugte Ausführungsformen ergeben sich aus den abhängigen Ansprüchen.

Erfindungsgemäß umfasst das erfindungsgemäße Antriebssystem: ein Antriebselement oder - aggregat; und eine Gegenverzahnung, wobei das Antriebselement aufweist: eine endlose Kette zum gegenseitigen Eingriff mit der Gegenverzahnung zur Übertragung einer Antriebskraft; und wenigstens ein Antriebsritzel zum gegenseitigen Eingriff mit der Kette und zum Antrieb der Kette. An der Kette sind Führungskomponenten angeordnet; und das Antriebssystem weist ein Führungselement zur Führung der Führungskomponenten der Kette wenigstens im Bereich des Eingriffs mit der Gegenverzahnung auf, wobei das Führungselement so angeordnet ist, dass die in dem Bereich des Führungselements befindlichen Führungskomponenten während der Bewegung der Kette vom Führungselement geführt werden. Die Gegenverzahnung ist stationär an einer Transportstrecke angeordnet.

Mit diesem Antriebssystem kann ein größerer wirkender Teilkreis simuliert werden, der zugleich in mehrere Halter bzw. Zähne der Gegenverzahnung eingreift. So kann durch eine Zwangsführung der Antriebsbolzen der Kette über die Führungskomponenten, z.B. in einer Nut, ein Teilkreis mit großem Teilkreisdurchmesser (z.B. 800 mm bei ansonsten typischen geometrischen Bemaßungen) erzeugt werden, was zu einer erhöhten Überdeckung (z.B. 5 Zähne) führt.

Im erfindungsgemäßen Antriebssystem hat das Führungselement (z.B. eine Führungsleiste) die Form eines Kreisausschnitts mit dem Radius eines beliebig großen Teilkreises. Damit werden die Bolzen der Kette in der Zahnstange am Fahrrohr entlang dieses großen Teilkreises geführt, wodurch sich mehrere Bolzen gleichzeitig im Zahneingriff befinden können. Es wird somit eine Überlagerung von mehreren Zahneingriffen genutzt. Dadurch lässt sich eine höhere Kraft/ ein höheres Moment übertragen, gleichzeitig ist der Bauraum gegenüber der Verwendung eines Ritzels zur direkten Kraftübertragung auf die Gegenverzahnung geringer. Die Antriebskraft kann dadurch auf mehrere Bolzen übertragen werden, so dass der einzelne Bolzen entsprechend weniger belastet wird. Die Getriebeübersetzung kann bereits im Antriebselement bzw. Antriebssystem integriert werden.

Der Vorteil dieses Kettenantriebs ist also insbesondere, dass mit wesentlich geringerem Platzbedarf eine größere Antriebskraft übertragen werden kann als über bekannte Lösungen mit einem Antriebsrad.

Die Antriebsbolzen sind insbesondere als Kette über Laschen miteinander verbunden. Der Begriff "Kette" soll jedoch weit gefasst sein und jedes endlose biegsame Eingriffselement umfassen, das abschnittsweise im Stil einer Kette in eine Gegenverzahnung eingreifen kann.

Insbesondere sind zwei Zahnritzel zum Antrieb der Kette vorgesehen. Die beiden Zahnritzel können gleichzeitig die Kette antreiben und teilen sich dadurch die erforderliche Leistung bzw. das Moment. Die Folge ist eine hohe Kraftaufnahme wegen der Überlagerung vieler Halter bei gleichzeitig kompakter Bauweise. Die Motoren können an ein Gehäuse des kompakten Antriebselements angeflanscht werden. Das System bildet einen Antriebsstrang mit vorzugsweise zwei Motoren, möglich ist auch einer oder mehr als zwei Motoren bzw. Antriebsritzel.

Im erfinderischen Antriebssystem können Bolzen (vorzugsweise alle oder eine Teilmenge der Bolzen) einer gewöhnlichen Kette mittels der Führungskomponenten zwangsgeführt werden, und so kann der wirkende Teilkreis, der im Eingriff mit der Gegenverzahnung steht, vergrößert werden.

Die Gegenverzahnung ist insbesondere an einer Führungsschiene der Transportstrecke angeordnet.

Das Führungselement kann eine Führungsnut und/oder eine Führungsrille und/oder eine Führungsfläche zum Eingriff und/oder zur Anlage der Führungskomponenten aufweisen. Die Kette wird zumindest im Bereich eines Teilkreises geführt, entlang dem die Kette mit der Gegenverzahnung im Eingriff stehen soll.

Die Führungskomponenten können vorzugsweise Bolzen aufweisen. Sie können beispielsweise in Form von Verlängerungen der Bolzen der Antriebskette ausgebildet sein.

Vorzugsweise können die Führungskomponenten Wälzlager und/oder Gleitbuchsen aufweisen. Dabei laufen beispielsweise Wälzlager in einer Führungsnut des Führungselements, um die Reibung (Rollreibung) so gering wie nur möglich zu halten.

Die Führungskomponenten können wenigstens eine zusätzliche Führungskette aufweisen. Diese ist insbesondere seitlich an der Antriebskette befestigt. Als Führungskomponenten können auch die Glieder der Führungskette angesehen werden.

Die Führungskomponenten können insbesondere zum Abrollen am Führungselement ausgebildet sein, z.B. durch seitlich der Antriebskette angebrachte drehbare Rollen/Buchsen oder Wälzlager. Die Führungskomponenten können insbesondere unabhängig von der Antriebskette am Führungselement abrollen.

Insgesamt kommen als Optionen für die Führung Wälzlager, Gleitlager, Führungsketten, Bolzen, usw., in Frage.

Die Führungskomponenten sind insbesondere seitlich der Antriebskette angeordnet bzw. erstrecken sich seitlich von der Antriebskette. Das Wort "seitlich" bezieht sich auf die Bewegungsrichtung der Antriebskette. Die von der Bewegungsrichtung und der Eingriffsrichtung der Gegenverzahnung gebildete Ebene kann als Bewegungsebene der Kette bezeichnet werden. Die Führungskomponenten sind an einer oder beiden Seiten der Ebene angeordnet. Für die Gewährleistung eines optimalen Eingriffs müssen die Bolzen der Antriebskette relativ tief in die Gegenverzahnung eintauchen, was dazu führt, dass die Zahnspitze über die Rollenkette hinausgehen kann. Bei dem erfindungsgemäßen Prinzip kann dies durch den seitlichen Versatz der Führung (umfassend Führungskomponenten und Führungselement) gewährleistet werden.

Die Führungskomponenten können insbesondere seitlich der Bolzen und/oder Rollen der Antriebskette angeordnet sein, z.B. auf Höhe der Bolzen/Rollen, z.B. indem die Bolzen der Antriebskette einfach zu Führungskomponenten verlängert werden.

Die Führungskomponenten können beidseitig der Kette angeordnet sein.

Die Gegenverzahnung kann beispielsweise eine Zahnstange sein.

Das Antriebssystem weist insbesondere einen Motor auf, der wenigstens eines der Antriebsritzel, insbesondere zwei Antriebsritzel antreibt. Es können jedoch auch für einzelne oder jedes Antriebsritzel ein eigener Motor (kleiner und mit geringerer Leistung als im Fall eines leistungsstärkeren Antriebsmotors) vorgesehen sein.

Durch eine Einhausung des Antriebselements kann ein kompaktes Antriebsmodul bereitgestellt werden. Das Gehäuse reduziert zudem die Geräuschentwicklung. Durch den Einsatz weicher Rollen kann die Lärmentwicklung weiter reduziert werden. Die Antriebskette als Verschleißteil kann leicht ausgewechselt werden.

Im Rahmen der Erfindung soll jedoch nicht nur das Antriebssystem beansprucht werden, sondern auch ein Teil des Antriebssystems, nämlich eine Rollenkette, die eine Einrichtung zur Zwangsführung auf einer vorgegebenen zweidimensionalen Bahnkurve umfasst. Die Rollenkette weist damit Führungskomponenten und ein Führungselement, wie oben und im weiteren beschrieben, auf, z.B. zusätzliche außenliegende Rollen, die auf verlängerten Bolzen der Kette angeordnet sein können. Die Rollen können rollreibungsreduziert (über Wälzlager) zwangsgeführt sein und erzeugen dadurch beispielsweise eine höhere Überdeckung. Alle im Zusammenhang mit dem Antriebssystem beschriebenen Merkmale sollen, soweit technisch sinnvoll, auch im Zusammenhang mit der Rollenkette beansprucht werden.

### KURZE BESCHREIBUNG DER FIGUREN

Weitere Vorteile und Merkmale der Erfindung werden aus der Beschreibung bevorzugter Ausführungsbeispiele anhand der Figuren deutlich. Es zeigen:
Figur 1 eine schematische Darstellung eines erfindungsgemäßen Antriebssystems;
Figur 2 eine weitere schematische Darstellung eines erfindungsgemäßen Antriebssystems;
Figur 3a, 3b Darstellungen eines Teilbereichs einer ersten Ausführungsform eines erfindungsgemäßen Antriebssystems;
Figur 4a, 4b Darstellungen eines Teilbereichs einer zweiten Ausführungsform eines erfindungsgemäßen Antriebssystems; und
Figur 5a, 5b Darstellungen eines Teilbereichs einer dritten Ausführungsform eines erfindungsgemäßen Antriebssystems; und
Figur 6 Darstellung einer weiteren Anwendung des erfindungsgemäßen Antriebssystems.

### DETAILLIERTE BESCHREIBUNG BEVORZUGTER AUSFÜHRUNGSBEISPIELE

Die nachfolgend beschriebenen Ausführungsbeispiele beziehen sich auf erfindungsgemäße Antriebssysteme, insbesondere für schienengebundene Transportsysteme, speziell auch zum Einsatz bei Vergnügungsfahrzeugen.

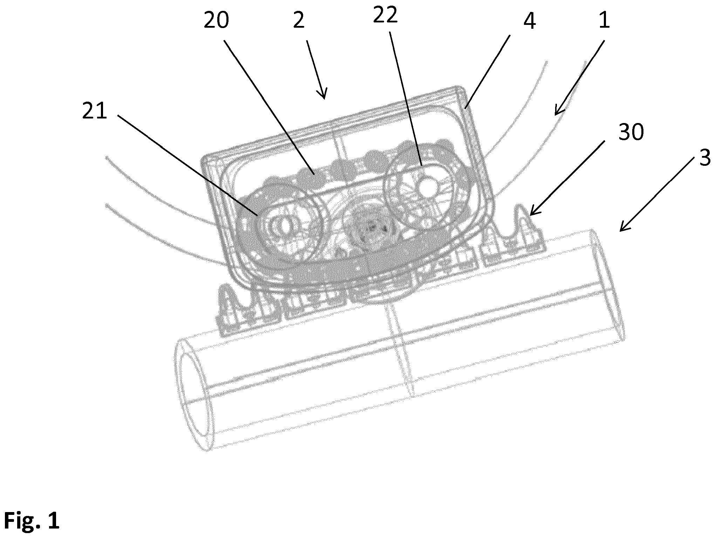

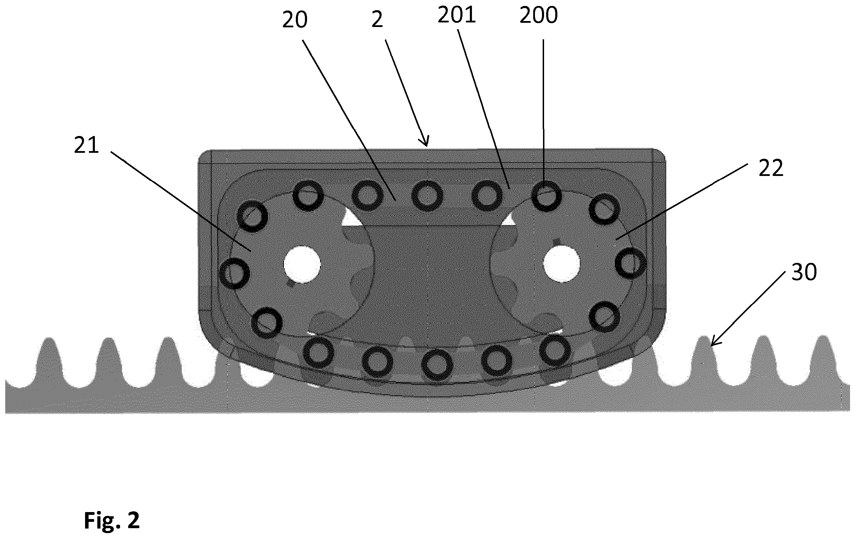

Das in den Figuren 1 und 2 dargestellte Antriebssystem 1 weist einerseits ein Antriebselement 2 oder Antriebsaggregat auf, andererseits eine Gegenverzahnung 30, die im vorliegenden Fall an einer Führungsschiene 3 angeordnet ist. Die Gegenverzahnung 30 kann beispielsweise eine Zahnstange oder Zahnkette sein.

Das Antriebselement 2 weist zwei Antriebsritzel 21 und 22, sowie eine von den Antriebsritzeln 21 und 22 angetriebene Antriebskette 20 auf. Die Antriebskette 20 kann eine herkömmliche Rollenkette mit beidseitig durch Laschen 201 (Außen- und Innenlaschen) verbundenen Bolzen sein. Auf den Bolzen sind Rollen 200 angeordnet, sodass diese an den Zahnflanken der Gegenverzahnung abrollen können. Die Antriebskette 20 ist zum gegenseitigen Eingriff mit der Gegenverzahnung 30 zur Bereitstellung eines kompakten formschlüssigen Antriebs konzipiert.

Außerdem weist das Antriebselement 2 erfindungsgemäß mit der Kette 20 verbundene Führungskomponenten und wenigstens ein Führungselement auf, das mit den Führungskomponenten zusammenwirkt, um die Kette in einem vorgegebenen Teilabschnitt auf einer Bahn zu halten bzw. zu führen. Varianten der Führungskomponenten werden nachfolgend beschrieben.

Die Komponenten des Antriebselements 2 können kompakt in einem Gehäuse 4 untergebracht sein. Ein oder zwei Motoren (nicht dargestellt), der/die die Antriebsritzel 21 und/oder 22 antreibt/antreiben, kann/können außerhalb des Gehäuses 4 angeordnet an das Antriebselement 2 (nämlich die Antriebsritzel 21, 22) angekoppelt werden. Der bzw. die Motoren können jedoch auch im Gehäuse 4 integriert sein.

Die folgenden Figuren zeigen Varianten bzw. Konzepte des erfindungsgemäßen Antriebssystems 1. Dabei sind jeweils ein Teilbereich des Antriebselements 2 und der Gegenverzahnung 30 dargestellt. Gleiche oder sich entsprechende Komponenten sind mit denselben Bezugszeichen versehen. Insbesondere weist das Antriebselement 2 eine Antriebskette 20. Es ist jeweils der Abschnitt (Teilkreis) der Kette 20 gezeigt, der im Eingriff oder nahezu im Eingriff mit der Gegenverzahnung 30 steht.

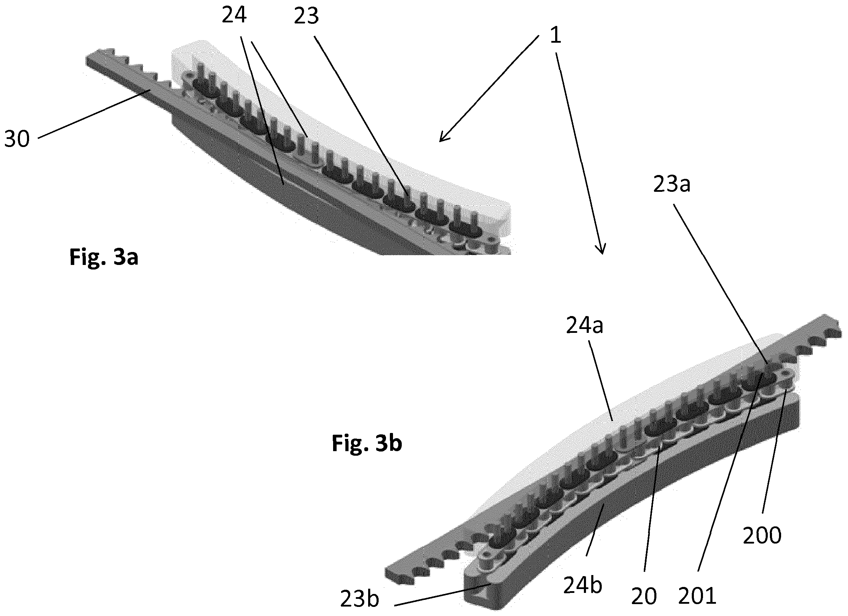

Die Figuren 3a und 3b zeigen eine erste Variante des Antriebssystems 2 aus zwei verschiedenen Perspektiven. Erfindungsgemäß weist jedes Kettenglied Führungskomponenten 23 in Form von sich beidseitig von den Bolzen der Antriebskette erstreckenden Führungsbolzen auf. Die Führungsbolzen können verlängerte und seitlich von der Antriebskette 20 hervorstehende Teile der Bolzen der Antriebskette 20 sein.

Die Führungskomponenten 23 werden durch ein Führungselement 24 (hier umfassend ein oberes Führungselement 24a und ein unteres Führungselement 24b), das wenigstens eine Rille oder Nut aufweist, in die die Führungsbolzen eingreifen, geführt. Das Führungselement 24 ist in einem Bereich des Antriebselements 2 angeordnet, in dem bestimmungsgemäß die Antriebskette 20 in die Gegenverzahnung 30 eingreifen soll, wie dies dargestellt ist.

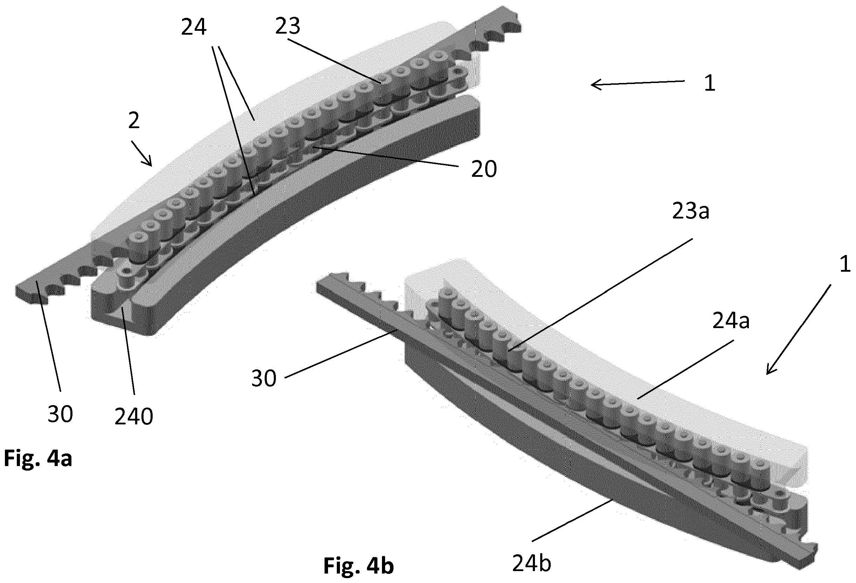

Die Figuren 4a und 4b zeigen eine zweite Variante des Antriebssystems 2 aus zwei verschiedenen Perspektiven. Erfindungsgemäß weist jedes Kettenglied Führungskomponenten 23 in Form von sich beidseitig von den Gliedern der Antriebskette 20 erstreckenden Gleitbuchsen oder Rollen auf. Die Gleitbuchsen können unabhängig von der Antriebskette 20 an einem Führungselement 24 (hier umfassend ein oberes Führungselement 24a und ein unteres Führungselement 24b) abrollen. Das Führungselement 24 kann eine beispielsweise gekrümmte Führungsfläche mit großem Radius aufweisen, mit der die Rollen des Antriebselements 2 im Eingriffsabschnitt des Antriebselements 2 in Kontakt stehen und an der sie entlangrollen, um die Antriebskette 20 in diesem Abschnitt zu führen. Dadurch wird die durch die Führung erzeugte Reibung (als Rollreibung statt Gleitreibung) verringert. Es handelt sich bei dieser Variante um ein Wälzlager. Das Führungselement 24 ist wenigstens in einem Bereich des Antriebselements 2 angeordnet, in dem bestimmungsgemäß die Antriebskette 20 in die Gegenverzahnung 30 eingreifen soll, wie dies dargestellt ist.

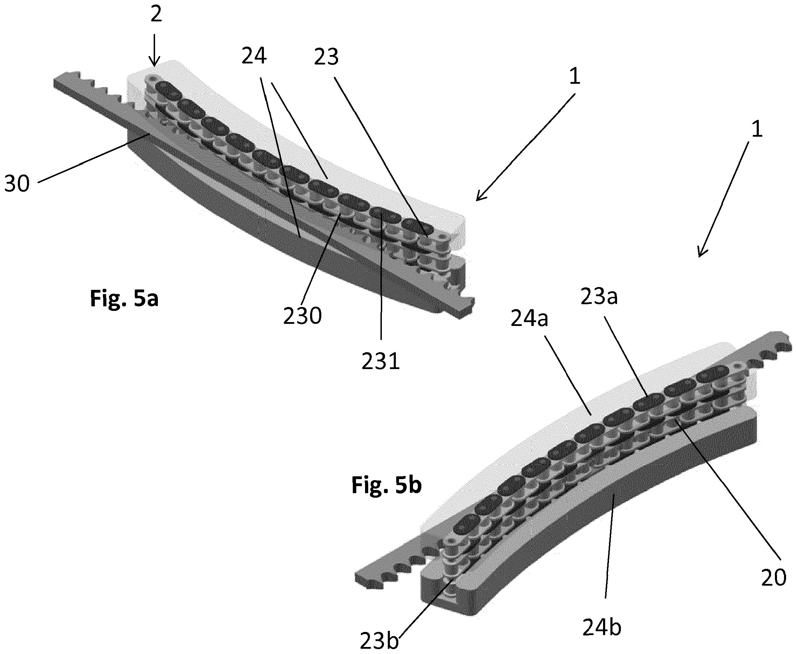

Die Figuren 5a und 5b zeigen eine dritte Variante des Antriebssystems 2 aus zwei verschiedenen Perspektiven. Erfindungsgemäß sind die Führungskomponenten 23 für die Antriebskette 30 in Form einer Führungskette (bzw. deren Komponenten) ausgebildet, die seitlich an der Antriebskette 30 angeordnet und mit dieser verbunden ist. In diesem Fall sind zwei Führungsketten 23a bzw. 23b vorgesehen, von denen eine an jeder Seite der Antriebskette 30 befestigt ist. Die Antriebskette 20 und die Führungsketten 23 sind miteinander verbunden, sodass die Führung der Führungsketten 23 auch eine Führung der Antriebskette 20 bewirkt.

Die Führungsketten 23a und 23b wirken mit dem Führungselement 24 zusammen, um die Antriebskette 23 zu führen. Das Führungselement 24 kann eine Führungsfläche oder eine Nut umfassen, an/in der die Führungskette gleitet. Vorzugsweise weist das Führungselement 24 jedoch eine Struktur auf, an der die Rollen der Führungskette 23 entlangrollen bzw. abrollen können. So kann zur Führung am Führungselement 24 ein Profil vorgesehen sein, auf dem die Rollen der Führungskette(n) entlangrollen, z.B. ein zwischen den Kettenlaschen der Führungskette angeordneter Grat. In einer anderen Variante kann das Führungselement 24 selbst in Form einer Mehrzahl von Zahnrädern ausgebildet sein, die die Führungskette 23 und damit die mit ihr verbundene Antriebskette 20 führen. Bei dieser Variante rollen die Kettenglieder der Ketten 20 und 23 an der jeweiligen Gegenverzahnung 30 bzw. den Zähnen des Führungselements 24 ab, sodass die Reibung reduziert wird.

Durch seitlich an der Antriebskette 20 angeordneten Führungskomponenten 23 stört die Führung nicht den Antrieb und umgekehrt. Die Zähne der Gegenverzahnung 30 können dementsprechend tief zwischen die Kettenglieder der Antriebskette 20 eingreifen. Dadurch können große Kräfte übertragen werden. Die Führung kann relativ unabhängig von der Übertragung der Antriebskraft konzipiert werden.

In den gezeigten Varianten sind sowohl die Antriebskette 20 als auch ggf. die Führungskette 23 als Rollenkette dargestellt. Es lässt sich jedoch natürlich jede beliebige Kettenart nach diesem Prinzip darstellen. In jedem Fall ist es möglich, einen Teilkreis mit großem Radius und damit eine hohe Kraftübertragung zwischen Antriebselement 2 und Gegenverzahnung 30 bei geringer Baugröße des Antriebselements 2 zu realisieren.

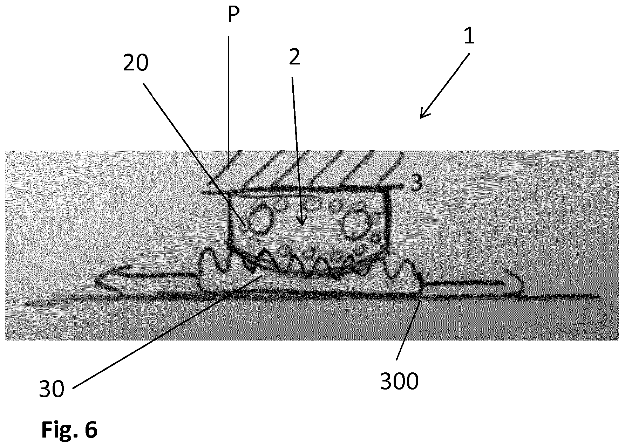

In der Figur 6 ist eine weitere Anwendung der Erfindung gezeigt. In diesem Fall weist das System 1 ein Antriebselement 2, das stationär an einem Ort P angeordnet ist, und eine bewegliche Gegenverzahnung 30 auf. Das Antriebselement 2 ist dafür vorgesehen, die Gegenverzahnung (z.B. Zahnstange) 30, ähnlich wie bei einem Spindelantrieb, linear in einer stationären Führung 300 zu bewegen bzw .anzutreiben.

## Patentansprüche

1. Antriebssystem (1), umfassend:
ein Antricbsclcmcnt (2); und
eine Gegenverzahnung (30),
wobei das Antriebselement (2) aufweist: eine endlose Kette (20) zum gegenseitigen Eingriff mit der Gegenverzahnung (30) zur Übertragung einer Antriebskraft; und wenigstens ein Antriebsritzel (21, 22) zum gegenseitigen Eingriff mit der Kette (20) und zum Antrieb der Kette (20),
wobei an der Kette (20) Führungskomponenten (23) angeordnet sind; und das Antriebssystem (1) ein Führungselement (24) zur Führung der Führungskomponenten (23) der Kette (20) wenigstens im Bereich des Eingriffs mit der Gegenverzahnung (30) aufweist, wobei das Führungselement (24) so angeordnet ist, dass die Führungskomponenten (23) während der Bewegung der Kette (20) vom Führungselement (24) geführt werden, **dadurch gekennzeichnet, dass**
die Gegenverzahnung (30) stationär an einer Transportstrecke angeordnet ist.

2. Antriebssystem (1) nach Anspruch 1, **dadurch gekennzeichnet, dass**
die Gegenverzahnung (30) an einer Führungsschiene (3) der Transportstrecke angeordnet ist.

3. Antriebssystem (1) nach einem der vorhergehenden Ansprüche, **dadurch gekennzeichnet, dass**
das Führungselement (24) eine Führungsnut (241) und/oder eine Führungsrille und/oder eine Führungsfläche zum Eingriff und/oder zur Anlage der Führungskomponenten (23) aufweist.

4. Antriebssystem (1) nach einem der vorhergehenden Ansprüche, **dadurch gekennzeichnet, dass**
die Führungskomponenten (23) Bolzen aufweisen.

5. Antriebssystem (1) nach einem der vorhergehenden Ansprüche, **dadurch gekennzeichnet, dass**
die Führungskomponenten (23) Wälzlager und/oder Gleitbuchsen aufweisen.

6. Antriebssystem (1) nach einem der vorhergehenden Ansprüche, **dadurch gekennzeichnet, dass**
die Führungskomponenten (23) wenigstens eine Führungskette aufweisen.

7. Antriebssystem (1) nach einem der vorhergehenden Ansprüche, **dadurch gekennzeichnet, dass**
die Führungskomponenten (23) zum Abrollen am Führungselement (24) ausgebildet sind.

8. Antriebssystem (1) nach einem der vorhergehenden Ansprüche, **dadurch gekennzeichnet, dass**
die Führungskomponenten (23) seitlich der Kette (20) angeordnet sind bzw. sich seitlich von der Kette (20) erstrecken.

9. Antriebssystem (1) nach einem der vorhergehenden Ansprüche, **dadurch gekennzeichnet, dass**
die Führungskomponenten (23) seitlich der Bolzen und/oder Rollen der Kette (20) angeordnet sind.

10. Antriebssystem (1) nach einem der vorhergehenden Ansprüche, **dadurch gekennzeichnet, dass**
die Führungskomponenten (23) beidseitig der Kette (20) angeordnet sind.

11. Antriebssystem (1) nach einem der vorhergehenden Ansprüche, **dadurch gekennzeichnet, dass**
die Gegenverzahnung (30) eine Zahnstange ist.

12. Antriebssystem (1) nach einem der vorhergehenden Ansprüche, **dadurch gekennzeichnet, dass**
das Antriebssystem einen Motor aufweist, der wenigstens eines der Antriebsritzel (31, 32), insbesondere zwei Antriebsritzel (31, 32) antreibt.

## Claims

1. A drive system (1) comprising:
a drive element (2); and
a counter gearing (30),
wherein the drive member (2) comprises: an endless chain (20) for meshing with the counter gearing (30) to transmit a driving force; and at least one drive sprocket (21, 22) for meshing with the chain (20) and driving the chain (20),
wherein guide components (23) are arranged at the chain (20); and the drive system (1) comprises a guide element (24) for guiding the guide components (23) of the chain (20) at least in the area of engagement with the counter gearing (30), wherein the guide element (24) is arranged in such a way that the guide components (23) are guided by the guide element (24) during the movement of the chain (20), **characterised in that**
the counter gearing (30) is arranged stationary on a transport path.

2. The drive system (1) according to claim 1, **characterised in that**
the counter gearing (30) is arranged at a guide rail (3) of the transport path.

3. The drive system (1) according to any of the preceding claims, **characterised in that** the guide element (24) has a guide groove (241) and/or a guide notch and/or a guide surface for engagement and/or abutment of the guide components (23).

4. The drive system (1) according to any of the preceding claims, **characterised in that** the guide components (23) comprise bolts.

5. The drive system (1) according to any of the preceding claims, **characterised in that** the guide components (23) comprise rolling bearings and/or sliding bushes.

6. The drive system (1) according to any of the preceding claims, **characterised in that** the guide components (23) comprise at least one guide chain.

7. The drive system (1) according to any of the preceding claims, **characterised in that** the guide components (23) are designed to roll on the guide element (24).

8. The drive system (1) according to any of the preceding claims, **characterised in that** the guide components (23) are arranged laterally of the chain (20) or extend laterally from the chain (20).

9. The drive system (1) according to any of the preceding claims, **characterised in that** the guide components (23) are arranged laterally of the bolts and/or of the rollers of the chain (20).

10. The drive system (1) according to one of the preceding claims, **characterised in that** the guide components (23) are arranged on both sides of the chain (20).

11. The drive system (1) according to one of the preceding claims, **characterised in that** the counter gearing (30) is a toothed rack.

12. The drive system (1) according to one of the preceding claims, **characterised in that** the drive system comprises a motor which drives at least one of the drive sprockets (31, 32), in particular two drive sprockets (31, 32).

## Revendications

1. Système d'entraînement (1), comprenant :
un élément d'entraînement (2) ; et
une contre-denture (30),
l'élément d'entraînement (2) présentant : une chaîne sans fin (20) destinée à s'engrener réciproquement avec la contre-denture (30) pour transférer une force d'entraînement ; et
au moins un pignon d'entraînement (21,22) destiné à s'engrener réciproquement avec la chaîne (22) et à entraîner la chaîne (20),
des composants de guidage (23) étant disposés au niveau de la chaîne (20) ; le système d'entraînement (1) présentant un élément de guidage (24) pour le guidage des composants de guidage (23) de la chaîne (20) au moins au niveau de l'engrènement avec la contre-denture (30), l'élément de guidage (24) étant disposé de manière à ce que les composants de guidage (23) soient guidés pendant le mouvement de la chaîne (20) par l'élément de guidage (24), **caractérisé en ce que**
la contre-denture (30) est disposée de manière stationnaire au niveau d'un parcours de transport.

2. Système d'entraînement (1) selon la revendication 1, **caractérisé en ce que**
la contre-denture (30) est disposée au niveau d'un rail de guidage (3) du parcours de transport.

3. Système d'entraînement (1) selon une des revendications précédentes, **caractérisé en ce que**
l'élément de guidage (24) présente une rainure de guidage (241) et/ou un sillon de guidage et/ou une surface de guidage destiné à l'engrènement et/ou à l'appui des composants de guidage (23).

4. Système d'entraînement (1) selon une des revendications précédentes, **caractérisé en ce que**
les composants de guidage (23) présentent des goujons.

5. Système d'entraînement (1) selon une des revendications précédentes, **caractérisé en ce que**
les composants de guidage (23) présentent des paliers à roulement et/ou des douilles de glissement.

6. Système d'entraînement (1) selon une des revendications précédentes, **caractérisé en ce que**
les composants de guidage (23) présentent au moins une chaîne de guidage.

7. Système d'entraînement (1) selon une des revendications précédentes, **caractérisé en ce que**
les composants de guidage (23) sont conçus pour rouler sur l'élément de guidage (24).

8. Système d'entraînement (1) selon une des revendications précédentes, **caractérisé en ce que**
les composants de guidage (23) sont disposés à côté de la chaîne (20) ou s'étendent à côté de la chaîne (20).

9. Système d'entraînement (1) selon une des revendications précédentes, **caractérisé en ce que**
les composants de guidage (23) sont disposés à côté des goujons et/ou des rouleaux de la chaîne (20).

10. Système d'entraînement (1) selon une des revendications précédentes, **caractérisé en ce que**
les composants de guidage (23) sont disposés deux côtés de la chaîne (20).

11. Système d'entraînement (1) selon une des revendications précédentes, **caractérisé en ce que**
la contre-denture (30) est une crémaillère.

12. Système d'entraînement (1) selon une des revendications précédentes, **caractérisé en ce que**
le système d'entraînement présente un moteur qui entraîne au moins un des pignons d'entraînement (31,32), en particulier deux pignons d'entraînement (31,32).
